# EUROPEAN PATENT APPLICATION

(11) **EP 4 563 841 A1**
(43) Date of publication of application: **04.06.2025**
(21) Application number: 23212910.6
(22) Date of filing: 29.11.2023
(51) Int. Cl.: F16F 9/32, F16F 9/36, F16F 9/18

(54) **INTERFACE ELEMENT FOR A SHOCK ABSORBER AND A SHOCK ABSORBER**

(71) Applicant: DRiV Automotive Inc., Northville, MI 48168 (US)
(72) Inventor: DIEZ, Veronica, 48015 Bilbao Vizcaya (ES); ALVAREZ CENDOYA, Alexander, 48004 Bilbao (ES); LLONCH, Kenneth, 3500 Hasselt (BE)
(74) Representative: Wagner & Geyer

(57) **Abstract**

The present application relates to an interface element (100) adapted for use in a shock absorber (200), the interface element (100) comprising a cylindrical shape coaxially arranged around an axis A, wherein the interface element (100) further comprises a first engaging end (110), a second engaging end (120), an engaging part (130), and at least one valve slot (140). The interface element (100) forms a sealing interface between a first central cylinder (230), a second central cylinder (240), an inner cylinder (210) and at least one valve (262, 264) in a shock absorber (200). The disclosure further relates to a shock absorber (200) and a method (300) for installing an interface element (100) into a shock absorber (200).

## Description

### Technical Field

The present disclosure generally relates to an interface element for engaging with at least one valve and at least one cylinder in a shock absorber to form a sealing interface, and to a shock absorber comprising such an interface element.

### Background

Shock absorbers are known in the art. Shock absorbers are an important part within the field of vehicle suspensions to, amongst others, improve stability, safety and to increase comfort. The types of shock absorbers range from mechanical, pneumatic, hydraulic, to electromagnetic, and further. Shock absorbers for use in vehicles are typically designed to be either twin-tube or mono-tube. Mono-tube shock absorbers include one tube and two pistons moving up and down in the tube. Twin-tube shock absorbers include two nested cylindrical tubes, the inner tube defining a pressure chamber, which is divided into two chambers by the piston, one compression chamber and one rebound chamber. The outer tube defines a reserve chamber. Further, there is typically at least one valve arranged in the inner cylinder allowing hydraulic fluid to flow in or out from the compression chamber and/or rebound chamber. When a piston moves up and down in the inner cylinder, a hydraulic fluid flows between the compression chamber, the rebound chamber, and the reserve chamber via the valve(s) to convert the shock energy into heat.

A challenge with twin-tube shock absorbers is that if the chambers and valve(s) are not properly sealed, the hydraulic fluid may leak between the chambers and the valve(s) even when it is not supposed to. This may cause a pressure drop inside the compression chamber and/or rebound chamber, and hydraulic fluid ending up in the "wrong" chamber, i.e. leaking to the rebound chamber when it is supposed to flow to the compression chamber, causing an impaired damping effect of the shock absorber. This ultimately leads to a decreased comfort, stability and safety for a driver of the vehicle.

One type of twin-tube shock absorber comprises an intermediate tube installed between the inner and outer cylinder of the twin-tube, to seal the compression chamber, the rebound chamber and the valve(s).

A problem with this type of shock absorber is that a large number of sealing components are needed to properly seal the shock absorber. Moreover, double components may be required if there are more than one valve present, increasing the costs for manufacturing the shock absorber.

### Summary

It is an object of the present disclosure to overcome the problems of efficiently sealing a shock absorber, and more specifically, a two valve shock absorber with three tubes. A first object of the invention is to provide an improved shock absorber, and in particular an interface element for a shock absorber, according to a first aspect of the invention. A second object of the invention is to provide a shock absorber comprising an interface element. A third object of the invention is to provide a method for installing an interface element into a shock absorber. Preferred embodiments are defined in the dependent claims. Further advantageous embodiments are described in the following.

The invention is based on the inventors' realization that the sealing of the shock absorber may be improved by incorporating an interface element/sleeve with two intermediate tubes/central cylinders that combines the sealing between the compression chamber, the rebound chamber and the reserve chamber, with sealing of the valve(s). In other words, instead of using two independent central cylinders that are sealed separately, an interface element may be used for sealing between the chambers and for sealing the valves, to essentially integrate/merge two central cylinders into one central cylinder/intermediate tube. The use of two independent central cylinders leads to an increased number of sealing components needed to be installed in the shock absorber. Further, if there are more than one valve in the shock absorber, double components may be needed in order to seal all valves properly, further increasing the number of components. Sealing components take up space, and the more sealing components present, the more the risk increases for one of the sealing components to fail/break. This may be costly, and in a worst case scenario pose a safety risk. A further problem with independently sealed central cylinders is that a radial dimension of the central cylinders together with the sealing components may increase in order to fit all the components, resulting in a larger outer tube, and thus, the size of the shock absorber may have to be increased in a radial direction. Further, having two independent intermediate tubes, e.g. with one valve in each tube, restricts the minimum distance possible between the valves, which may restrict the flexibility of the shock absorber. The minimum distance possible between the valves is defined by the shape and fitting of the sealing components of the two independent intermediate tubes, meaning that the sealing components may cause an undesired limitation on the distance between the valves. This is at least partially solved by using an interface element according to the present invention.

By incorporating the functions of two independent intermediate tubes into one common intermediate tube, by an interface element according to the present invention, the number of sealing components may be kept down, the costs decreased, and a more effective way of sealing the chambers and the valves of the shock absorber achieved. Further, the flexibility of the shock absorber may be increased, since the restriction on the distance between the valves may be reduced. Thus the distance between the valves may be adapted more freely to comply with outer limitations.

A twin-tube shock may include an inner tube defining an inner volume, an intermediate tube arranged outside the inner tube defining an intermediate chamber between the intermediate tube and the inner tube. The intermediate chamber is in fluid connection with the inner volume. Further, the shock absorber includes an outer tube arranged outside the intermediate tube, defining a reserve chamber between the outer tube and the intermediate tube. The inner tube and the intermediate tubes are in the outer tube. Further, a piston is slidably arranged inside the inner tube, dividing the inner volume into a rebound chamber and a compression chamber. Two valves may be arranged in the outer cylinder, fluidly connecting the intermediate chamber and the reserve chamber. One valve may be fluidly connected to the rebound chamber, via the intermediate chamber, and the other valve fluidly connected to the compression chamber, via the intermediate chamber. There may further be a base valve between the compression chamber and the reserve chamber, for controlling the flow of hydraulic fluid between the compression chamber and the reserve chamber.

The rebound chamber, the compression chamber, the intermediate chamber, and the reserve chamber contain a hydraulic fluid, e.g., a liquid such as hydraulic oil and/or gas. The hydraulic fluid flows between the rebound chamber/the compression chamber and the reserve chamber through the valves and the intermediate chamber to adjust damping levels of the shock absorber. The valves typically provides a one-way flow from the rebound chamber/compression chamber to the reserve chamber, i.e., active valving. The hydraulic fluid in the inner volume that flows between the rebound chamber and the reserve chamber and flow from the rebound chamber to the reserve chamber is actively controlled by one valve. Similarly, the hydraulic fluid in the inner volume that flows between the compression chamber and the reserve chamber and flow from the compression chamber to the reserve chamber is actively controlled by the other valve. During rebound of the shock absorber, the piston reduces the rebound working chamber and expands the compression chamber. This movement compresses the hydraulic fluid in the rebound chamber and the hydraulic fluid flows from the rebound chamber to the reserve chamber as controlled by one of the valves. During this movement, the hydraulic fluid may also flow through and/or around the piston from the rebound chamber to the compression chamber and/or the hydraulic fluid may flow through and/or around the base valve from the reserve chamber to the compression chamber. During compression of the shock absorber, the piston expands the rebound chamber and reduces the compression chamber. During this movement, the hydraulic fluid may flow through and/or around the piston from the compression chamber to the rebound chamber and/or the hydraulic fluid may flow through and/or around the base valve from the compression chamber to the reserve chamber as controlled by one of the valves.

Moreover, in the context of the application, the wording that the pressurizing piston is "arranged, [...] inside said inner tube" comprise the different embodiments where the pressurizing piston may be arranged directly or indirectly in the inner tube, by being arranged inside one (or several) other components located inside the inner tube.

According to a first aspect of the invention, an interface element adapted for use in a shock absorber is provided. The shock absorber comprises an inner cylinder at least partially defining a fluid chamber, a first central cylinder, a second central cylinder, and an outer cylinder, and at least one valve arranged to create a fluid connection between the fluid chamber and the outside of the outer cylinder. The interface element comprises a cylindrical shape, and the interface element, the inner cylinder, the first central cylinder, the second central cylinder and the outer cylinder are arranged coaxially around an axis A. The interface element further comprises a first engaging end configured to sealingly engage a surface of the first central cylinder, a second engaging end configured to sealingly engage a surface of the second central cylinder, and an engaging part configured to sealingly engage a surface of the inner cylinder, and at least one valve slot configured to sealingly engage the at least one valve, such that the interface element forms a sealing interface between the first central cylinder, the second central cylinder, the inner cylinder and the at least one valve.

The interface element may be thereby advantageously be used together with the first and second central cylinders as a third tube for sealing between the compression chamber, the rebound chamber and the at least one valve of the shock absorber. The inner cylinder defining the fluid chamber may correspond to an inner tube of a shock absorber. The inner tube may define an inner volume, corresponding to the fluid chamber. A pressure piston may be slidably inserted into the inner cylinder, and divide the fluid chamber into a first inner volume, hereinafter referred to as the "compression chamber" and a second inner volume, hereinafter referred to as the "rebound chamber". The shock absorber may thus be a type of twin-tube shock absorber.

Further, the first central cylinder and the second central cylinder may be arranged between the inner tube and the outer tube of the shock absorber. The first central cylinder and the second central cylinder may define a volume between the inner cylinder and the first and second central cylinders, hereinafter referred to as the "intermediate chamber". The outer cylinder may define a volume between the first and second central cylinders and the outer cylinder, hereinafter referred to as the "reserve chamber". Moreover, the at least one valve may be arranged in the outer cylinder, and create a fluid connection between the fluid chamber and an outside of the outer cylinder. The outside of the outer cylinder may be a valve housing. The valve housing may be fixed to the shock absorber, such as to the outer cylinder. The at least one valve may further create a fluid connection between the intermediate chamber and the reserve chamber.

In the case where the at least one valve is one valve, the fluid chamber may correspond to either the compression chamber or the rebound chamber. Thus, the at least one valve may create a fluid connection between the compression chamber and the outside of the outer cylinder, or between the rebound chamber and the outside of the outer cylinder. In the case where the at least one valve are two valves, the fluid chamber may correspond to the rebound chamber and the compression chamber. A first valve may be in fluid connection with the compression chamber, and a second valve in fluid connection with the rebound chamber. The outside of the outer cylinder may in this example be two valve housings, a first valve housing connected to the first valve, and a second valve housing connected to the second valve. The at least one valve may be arranged in an outer surface of the outer cylinder. In the example where the at least one valve are two valves, the first valve may be arranged in the outer surface of the outer cylinder in a first position around the cylindrical body. The second valve may be arranged in a second position around the cylindrical body, opposite to the first position of the first valve. In another example, the first position of the first valve and the second position of the second valve are arranged adjacent to each other. It will be appreciated that the positions of the first valve and second valve are not limited to being positioned opposite or adjacent to each other, but further relative orientations between the first and second valve are also possible within the scope of the present invention.

Further, the at least one valve may be a check valve, i.e. a one-way valve. The one-way valve may allow hydraulic fluid to either enter the fluid chamber from an outside of the outer cylinder, or to exit the fluid chamber to an outside of the outer cylinder. Thus, the at least one valve may be an intake valve or an outlet valve. In the example where the at least one valve are two valves, the first valve may be an intake valve, and the second valve may be an outlet valve, or vice versa. It is to be understood that the at least one valve may be illustrated in the application as a part of a larger valve unit, and constitute the part interacting with the cylinders and the interface element, and still be referred to as a valve.

As mentioned, the fluid connection may fluidly connect the fluid chamber to an outside of the outer cylinder. According to one embodiment, the inner cylinder comprises at least one aperture, wherein the aperture creates a fluid connection between the at least one valve and the fluid chamber. In one example, the at least one aperture is arranged in the compression chamber, and wherein the at least one aperture may be one aperture or a plurality of apertures. In another example, the at least one aperture is arranged in the rebound chamber, and wherein the at least one aperture may be one aperture or a plurality of apertures. According to a further example, the at least one aperture may be at least two apertures, a first aperture arranged in the compression chamber of the inner cylinder, and a second aperture in the rebound chamber of the inner cylinder. The first aperture may be a plurality of apertures, and the second aperture may be a plurality of apertures. The first and second aperture(s) may be in fluid connection with the intermediate chamber, and flow via the intermediate chamber into the at least one valve. The first aperture(s) and the second aperture(s) may for example be machined and/or punched aperture(s) in the surface of the inner cylinder. Thus, hydraulic fluid may be able to flow in both directions through the first aperture(s) and the second aperture(s), thus both out from the compression chamber and/or rebound chamber into the intermediate chamber, and from the intermediate chamber into the compression chamber and/or the rebound chamber. The aperture may be any opening/hole/slit that allows fluid to pass through it.Thus, the fluid connection may include the intermediate chamber. The hydraulic fluid may flow from the outside of the outer cylinder or from the reserve chamber, through the at least one valve, through the intermediate chamber and into the compression chamber or the rebound chamber, via the first aperture(s) and/or second aperture(s). In another example, the hydraulic fluid may flow from the rebound chamber or compression chamber via the first and/or second aperture(s), through the intermediate chamber, through the at least one valve to an outside of the outer cylinder or to the reserve chamber. The hydraulic fluid may be a type of hydraulic liquid (e.g. oil) and/or gas. It is to be understood that the shock absorber may be configured to use any type of damping media/fluid, an example being hydraulic fluid.

The interface element comprises a cylindrical shape and is arranged coaxially around an axis A together with the inner cylinder, the outer cylinder, the first central cylinder and the second central cylinder. The interface element may be a unit/module/component/part that is adapted for use in a shock absorber. The interface element may be arrangeable/mountable/installable inside a shock absorber. The interface element may be a supplementary element configured to be used in a plurality of different shock absorbers. The first engaging end of the interface element is configured to sealingly engage a surface of the first central cylinder, and the second engaging end of the interface element is configured to sealingly engage a surface of the second central cylinder. By "engaging end" it is here meant, but not limited to, an end, a portion, a part and/or a section configured to create a seal between the engaging end and a part of the shock absorber. In other words, the engaging end may be defined as an engaging part. The engaging end(s) may constitute an extremity of the interface element, i.e. be a part at a periphery of the interface element. The engaging end(s) may comprise a surface configured to sealingly engage a surface of component/part of the shock absorber, such as the first and second central cylinder. It is to be understood that "sealingly engage" may mean closely securing/arranging two elements in order to create at least a partial seal between said two elements, wherein the seal may prevent/hinder/impede anything from passing between them, such as damping medium/fluid in a shock absorber. As previously mentioned, the first central cylinder and the second central cylinder may be arranged between the outer cylinder and the inner cylinder of the shock absorber. The first central cylinder and the second central cylinder may be arranged with a gap therebetween. A first end of the first central cylinder may thus face a first end of the second central cylinder. Further, the surface of the first central cylinder may be an outer surface of the first central cylinder, i.e. the surface of the first central cylinder facing the outer cylinder. Likewise, the surface of the second central cylinder may be an outer surface of the second central cylinder i.e. the surface of the second central cylinder facing the outer cylinder. The interface element may thus partly bridge the gap between the first central cylinder and the second central cylinder. For example, the interface element may be partly arranged between the first central cylinder and the second central cylinder, i.e. between the first end of the first central cylinder, and the first end of the second central cylinder. The interface element may further be partly arranged around the first central cylinder and the second central cylinder, i.e. on the surface of the first central cylinder and on the surface of the second central cylinder. The first engaging end and the second engaging end of the interface element may correspond to a first end and a second end of the cylindrical shape of the interface element.

According to one embodiment, the first engaging end is configured to sealingly engage a surface of the first central cylinder, and the second engaging end is configured to sealingly engage a surface of the second central cylinder, by at least one of welding and press-fitting. Thus, the interface element may be configured to be press-fitted between and/or welded to the first central cylinder and the second central cylinder. For example, in the case where the interface element is partly arranged between the first end of the central cylinder and the first end of the second central cylinder, to bridge the gap therebetween, the interface element may be press-fitted in said gap to seal the space between the first central cylinder and the second central cylinder. Press-fitting may advantageously be used to sealingly engage the interface element with the first central cylinder and the second central cylinder, since it is a reliable manufacturing step, providing a secure seal. Further, a press-fit between parts is easy to inspect, which is helpful in order to identify and prevent that any leaks and/or damages are present in the sealing engagement.

In the example where the first engaging end and the second engaging end of the interface element correspond to a first and second end of the cylindrical shape of the interface element, the body of the cylindrical shape may be arranged between the first central cylinder and the second central cylinder, whereas the first engaging end and the second engaging end may be arranged around the first central cylinder and the second central cylinder. The first engaging end of the interface element may be a protruding part extending in an axial direction along axis A. The protruding part may have a diameter, in the axial direction, which is greater than the diameter of the first central cylinder, and thereby overlap, i.e. function as a sleeve on, the first central cylinder, such that the first engaging end sealingly engages a surface of the first central cylinder, wherein the surface may be a surface facing the outer cylinder. The protruding part may extend along a portion of the length of the first central cylinder, for example at the first end of the first central cylinder. Likewise, the second engaging end of the interface element may be a protruding part extending in an axial direction along A. The protruding part may have a diameter, in the axial direction, which is greater than the diameter of the second central cylinder, and thereby function as a sleeve on the second central cylinder, such that the second engaging end sealingly engages a surface of the second central cylinder, wherein the surface may be a surface facing the outer cylinder. The protruding part may extend along a portion of the length of the second central cylinder, for example at the first end of the second central cylinder. The first engaging end and the second engaging end may be welded to the surfaces of the first central cylinder and the second central cylinder. A weld is beneficial since it is a conventional manufacturing method, providing a secure and rigid seal between parts. In the example where the body of the cylindrical shape of the interface element is arranged between the first central cylinder and the second central cylinder, and the first engaging end and the second engaging end are protruding parts arranged on a surface of the first central cylinder and the second central cylinder, both press-fitting and welding may be used. The body of the interface element may be press-fitted between the first end of the first central cylinder and the first end of the second central cylinder, whereas the first engaging end may be welded to the surface of the first central cylinder, and the second engaging end may be welded to the surface of the second central cylinder. This may advantageously seal the first central cylinder and the second central cylinder to the interface element. Thus, the interface element may be advantageously arranged to form a third tube together with the first central cylinder and the second central cylinder.

The interface element further comprises an engaging part configured to sealingly engage a surface of the inner cylinder. By "engaging part" it is here meant, but not limited to, a portion, a part and/or a section configured to create a seal between the engaging part and a part of the shock absorber. The engaging part may comprise a surface configured to sealingly engage a component/part of the shock absorber, such as the inner cylinder. The surface of the inner cylinder may correspond to the outer surface of the inner cylinder, i.e. the surface facing the interface element, the first central cylinder and the second central cylinder. The engaging part may advantageously seal a space between the interface element and the outer surface of the inner cylinder. Since the space between the third tube (i.e. the first central cylinder, the second central cylinder and the interface element) and the inner cylinder defines the intermediate chamber, the engaging part may divide the intermediate chamber into a first intermediate chamber and a second intermediate chamber. The first intermediate chamber may for example be the chamber defined by the space enclosed by the first central cylinder, the engaging part and the inner cylinder. The second intermediate chamber may, similarly, be defined by the space enclosed by the second central cylinder, the engaging part and the inner cylinder. In one example, the first aperture(s) in the inner cylinder may be fluidly connected to the first intermediate chamber, and the second aperture(s) in the inner cylinder may be fluidly connected to the second intermediate chamber. Thus, the engaging part may prevent hydraulic fluid flowing from the first aperture(s) in the compression chamber, via the intermediate chamber and into the rebound chamber, and vice versa, hydraulic fluid flowing from the second aperture(s) in the rebound chamber, via the intermediate chamber and into the compression chamber.

According to one embodiment, the engaging part comprises a protruding part configured to protrude radially from the interface element and to sealingly engage a surface of the inner cylinder. The protruding part may protrude radially from the interface element in a direction towards the inner cylinder. The protruding part may extend from the body of the cylindrical shape of the interface element, for example from an inner surface of the interface element, i.e. the surface of the interface element facing the inner cylinder. The protruding part may be continuous around the periphery of the interface element. Thus, the protruding part may be a ridge formed on an inner surface of the interface element. The protruding part may have one of a rectangular profile and a semi-circular profile. The protruding part may extend from the interface element until it contacts the outer surface of the inner cylinder. The protruding part may therefore advantageously form a sealing engagement with the surface of the inner cylinder.

According to one embodiment, the protruding part comprises a first groove and first sealing means arranged in the first groove, wherein the first sealing means are configured to sealingly engage a surface of the inner cylinder. In the case where the protruding part is a type of ridge with a rectangular profile, the first groove may be arranged in the rectangular profile, and also have a rectangular profile. In other examples, the first groove may have a semi-circular profile. The first groove may be continuous in the protruding part. Further, the first groove may have a shape corresponding to the first sealing means. The first sealing means may for example be a gasket or an o-ring. The first groove may thus be adapted to fit the first sealing means of this type. In this example, the first sealing means may be the component/part of the protruding part that extends to contact the outer surface of the inner cylinder. The protruding part itself may thus not be in contact with the outer surface, but instead the first sealing means constitutes the sealing engagement. The present embodiment may be advantageous in that the first groove ensures that the first sealing means are kept in place, and prevents it from being displaced. The use of a gasket, an o-ring or another type of standard sealing component is advantageous since it facilitates manufacturing. By using standardized components, time and costs may be saved on manufacturing steps, and quality may be assured. Furthermore, by arranging sealing means in a groove in the interface element, the interface element may be smaller and thus the shock absorber may be smaller.

Furthermore, the interface element comprises at least one valve slot configured to sealingly engage the at least one valve. The at least one valve slot may be arranged in the surface of the interface element. The at least one valve slot may for example be an aperture/opening/hole. The at least one valve slot may be configured to receive the at least one valve. The at least one valve slot may be arranged in a position in the interface element coinciding with the position of the at least one valve in the outer cylinder. The at least one valve slot may thereby be in fluid connection with the intermediate chamber. The fluid connection between the outside of the outer cylinder and the fluid chamber may therefore be defined by a flow of hydraulic fluid from an outside of the outer cylinder, through the valve, through the valve slot arranged in the interface element, into the intermediate chamber, and through the at least one aperture in the fluid chamber, or vice versa. The at least one valve slot may be sealingly engaged with the at least one valve, meaning that leakage between the valve and the interface element may be advantageously prevented.

According to one embodiment, the at least one valve comprises a first valve and a second valve, and the at least one valve slot comprises a first valve slot configured to sealingly engage the first valve and a second valve slot configured to sealingly engage the second valve. The first valve slot may be arranged in a first position in the interface element, coinciding with the first position of the first valve in the outer cylinder. Further, the second valve slot may be arranged in a second position in the interface element coinciding with the second position of the second valve in the outer cylinder. Thus, in the example where the at least one valve are two valves, the first valve slot may be in fluid connection with the first intermediate chamber, corresponding to being in fluid connection with the compression chamber. The second valve slot may then be in fluid connection with the second intermediate chamber, corresponding to being in fluid connection with the rebound chamber. The first valve slot may then be arranged in the interface element on one side relative to the engaging part, and the second valve slot may be arranged in the interface element on the other side relative the engaging part.

According to one embodiment, the at least one valve slot comprises a second groove and second sealing means arranged in the second groove, wherein the second sealing means are configured to sealingly engage the at least one valve. The at least one valve slot may, as previously mentioned, be an aperture in the surface of the interface element. The height of the at least one valve slot may thus equal the thickness of the cylindrical shape of the interface element. The second groove may be arranged in the inner walls of the at least one valve slot, corresponding to the height of the aperture. The second groove may have a semi-circular profile or a rectangular profile. The second groove may be continuous around the periphery of the inner walls of the at least one valve slot. Further, the second groove may have a shape corresponding to the second sealing means. The second sealing means may for example be a gasket or an o-ring. The second groove may thus be adapted to fit the second sealing means of this type. In this example, the second sealing means may constitute the sealing engagement between the at least one valve arranged in the at least one valve slot and the at least one valve slot. The present embodiment may be advantageous in that the second groove ensures that the second sealing means are kept in place, and prevents it from being displaced. Further, by integrating the second sealing means in the thickness of the interface element, the overall diameter of the interface element may be decreased, since no further components need to be added on top of the interface element. This is advantageous since it enables the use of an outer cylinder with a smaller diameter, meaning that the size of the shock absorber may be decreased, while still maintaining the same efficiency. Further, the present embodiment enables the distance between the valves along the length of the cylinders/tubes to be reduced. Further, the use of a gasket, an O-ring or another type of standard sealing component is advantageous since it facilitates manufacturing. By using standardized components, time and costs may be saved on manufacturing steps, and quality may be assured. Furthermore, by arranging sealing means in a groove in the interface element, the interface element may be smaller and thus the shock absorber may be smaller.

According to one embodiment, the interface element comprises a third groove arranged in a surface facing the outer cylinder and third sealing means configured to sealingly engage the at least one valve. The third groove may be arranged in the outer surface of the interface element, facing the outer cylinder. The third groove may have a semi-circular profile or a rectangular profile. The third groove may be continuous around the periphery of the outer surface of the interface element. Further, the third groove may have a shape corresponding to the third sealing means. The third sealing means may for example be a gasket or an o-ring. In this case, the third sealing means may be made from a standard component, such as a standard type of gasket or an o-ring of a standard size. The third groove may thus be adapted to fit the third sealing means of this type. In this example, the third sealing means may constitute the sealing engagement between the at least one valve arranged in the at least one valve slot and the reserve chamber defined by the outer cylinder. The present embodiment may be advantageous in that the third groove ensures that the third sealing means are kept in place, and prevents it from being displaced. The use of a gasket, an o-ring or another type of standard sealing component is advantageous since it facilitates manufacturing. By using standardized components, time and costs may be saved on manufacturing steps, and quality may be assured. Furthermore, by arranging sealing means in a groove in the interface element, the interface element may be smaller and thus the shock absorber may be smaller.

According to one embodiment, the interface element comprises a first rotating part and a second rotating part, each rotating part rotatably arranged around the axis A. The first rotating part comprises the first valve slot configured to sealingly engage the first valve, and the second rotating part comprises the second valve slot configured to sealingly engage the second valve. The first part and the second part are configured to rotate independently of each other, wherein the first rotating part is configured to engage the first valve, and the second rotating part is configured to engage the second valve. The interface element may thus be divided into two cylindrical bodies, the first rotating part and the second rotating part. The first rotating part and the second rotating part may be connected to each other, forming one unit. The present embodiment is advantageous in that it provides an increased flexibility. In the scenario where the position of the valve are fixed, the interface element may be restricted for use in shock absorbers having the corresponding positions of the valves intended to go into the first valve slot and the second valve slot. The first rotating part and the second rotating part being independently rotatable relative each other, mitigates this problem. The first and second valve slots may be rotated to a desired position by rotating the first rotating part and/or the second rotating part of the interface element. The interface element may as a result of this be adapted to an increased number of shock absorbers, making the interface element more versatile.

According to one embodiment, the interface element further comprises a sealing element arranged at least partially between the first rotating part and the second rotating part, wherein the sealing element is configured to sealingly engage the first rotating part and the second rotating part, wherein the first rotating part and second rotating part are configured to be individually rotatable relative the sealing element. The sealing element may be a gasket. The sealing element is beneficial since it ensures that the interface element may operate as one unit, preventing leakage between the first rotating part and the second rotating part. In an exemplary embodiment, the sealing element may comprise a sealing cylinder/sleeve/bearing. The sealing element may be configured to be compressed between the inner tube and the interface element. The present embodiment is thus further advantageous in that the distance between the valves may be customized in a versatile and practical manner, without having to using extra components/features, such as groove and/or an O-ring of different lengths.

According to one embodiment, the sealing element comprises a fourth groove and fourth sealing means arranged in the fourth groove, wherein the fourth sealing means are configured to sealingly engage a surface of the inner cylinder. The fourth groove may be arranged in the sealing element. The fourth sealing means may be a gasket or an o-ring. The fourth sealing means may be used instead of the first sealing means when the sealing element is present, due to the use of the first rotating part and the second rotating part. The present embodiment is beneficial since arranging the fourth groove and the fourth sealing means in the sealing element combines two sealing components in one sealing component. Furthermore, by arranging sealing means in a groove, the interface element may be smaller and thus the shock absorber may be smaller.

Thus, the interface element provides an integrated component for an intermediate tube in a shock absorber. The interface element allows for a combination of the functions of sealing between the compression chamber and the rebound chamber, as well as providing a sealing engagement for the at least one valve. This allows for a more robust shock absorber, with fewer sealing components. Furthermore, the interface element provides a more compact solution for the sealing in a three-cylinder shock absorber. As mentioned, since the at least one valve slot may be incorporated in the cylindrical shape of the interface element, and the first and second sealing means may be arranged therein, the diameter of the intermediate tube, i.e. the first central tube, the second central tube and the interface element may be decreased, which is beneficial since the diameter of the outer cylinder may be decreased. Further, the distance between the first valve and the second valve in a direction along axis A may be reduced. This is beneficial since it allows more freedom in relation to the design and assembly of the shock absorber, and the shock absorber may therefore be adapted to meet different needs, which increases the flexibility of the shock absorber. Consequently, the interface element allows for smaller shock absorbers. A further advantage with the interface element is that the intermediate tubes, i.e. the first central cylinder and the second central cylinder, does not need to be welded directly onto the inner tube, i.e. the inner cylinder. Instead, the interface element provides an interface between the first central cylinder and the second central cylinder, and a first sealing means dividing the first and second intermediate chambers instead. This is beneficial from a manufacturing point of view, since a step of welding the first and second intermediate cylinders may be skipped. Further, the risk of damaging the inner cylinder due to poor welding may be prevented. A poor weld seam may be hard to detect during manufacturing. Even further, the interface element may be exchanged as one unit, instead of having to change the entire shock absorber during service.

According to a second aspect of the invention, a shock absorber is provided. The shock absorber comprises an inner cylinder at least partially defining a fluid chamber, a first central cylinder, a second central cylinder, and an outer cylinder, wherein all cylinders are arranged coaxially around an axis A, a first valve arranged to create a first fluid connection between the fluid chamber and the outside of the outer cylinder, a second valve arranged to create a second fluid connection between the fluid chamber and the outside of the outer cylinder, wherein the first and second fluid connections are two different fluid connections, and an interface element according to the first aspect of the invention. The interface element forms a sealing interface between the first central cylinder, the second central cylinder, the inner cylinder, the first valve and the second valve.

According to one embodiment, at least one of the first valve and the second valve comprises a fifth groove, wherein the shock absorber comprises fifth sealing means arranged in the fifth groove configured to sealingly engage the interface element. As an alternative to the second groove and the second sealing means, the fifth groove and the fifth sealing means may instead be arranged in the first valve or the second valve, to seal the first valve and/or the second valve and the interface element. The fifth groove may be arranged in an outer surface of at least one of the first valve and the second valve, i.e. a surface facing the at least one valve slots of the interface element. The fifth groove may have a semi-circular profile or a rectangular profile. The fifth groove may be continuous around the periphery of the outer surface of at least one of the first valve and the second valve. Further, the fifth groove may have a shape corresponding to the fifth sealing means. The fifth sealing means may for example be a gasket or an o-ring. The fifth groove may thus be adapted to fit the fifth sealing means of this type. In this example, the fifth sealing means may constitute the sealing engagement between at least one of the first valve and the second valve and the at least one valve slot. The present embodiment may be advantageous in that the fifth groove ensures that the fifth sealing means are kept in place, and prevents it from being displaced. The use of a gasket, an o-ring or another type of standard sealing component is advantageous since it facilitates manufacturing. By using standardized components, time and costs may be saved on manufacturing steps, and quality may be assured.

According to a third aspect of the invention, a method for installing an interface element according to the first aspect of the invention into a shock absorber is provided. The method comprises installing the interface element by at least one of press fitting the interface element in between the first central cylinder and the second central cylinder, such that the first engaging end sealingly engages a surface of the first central cylinder and the second engaging end sealingly engages a surface of the second central cylinder, and welding the first engaging end to a surface of the first central cylinder and the second engaging end to a surface of the second central cylinder.

Effects and features of the second and third aspects are largely analogous to those described above in connection with the first aspect. Embodiments mentioned in relation to the first aspect are largely compatible with the second aspect and third aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief Description of the Drawings

The invention will in the following be described in more detail with reference to the enclosed drawings, wherein:
Fig. 1 schematically illustrates a cross-section of a shock absorber comprising an interface element according to an embodiment of the present disclosure;
Fig. 2 schematically illustrates a cross-section of an interface element according to an embodiment of the present disclosure;
Fig. 3 shows a perspective view of an interface element according to an embodiment of the present disclosure;
Fig. 4 schematically illustrates a cross-section of a detailed view of an interface element according to an embodiment of the present disclosure;
Fig. 5 schematically illustrates a detailed view of a first rotating part and a second rotating part of an interface element according to an embodiment of the present disclosure;
Fig. 6 shows a perspective view of a first valve housing and a second valve housing arranged in a shock absorber according to an embodiment of the present disclosure;
Fig. 7 schematically illustrates a method for installing an interface element into a shock absorber according to an embodiment of the present disclosure.

### Description of Embodiments

The invention will now be described with reference to the attached figures. Features illustrated or described as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

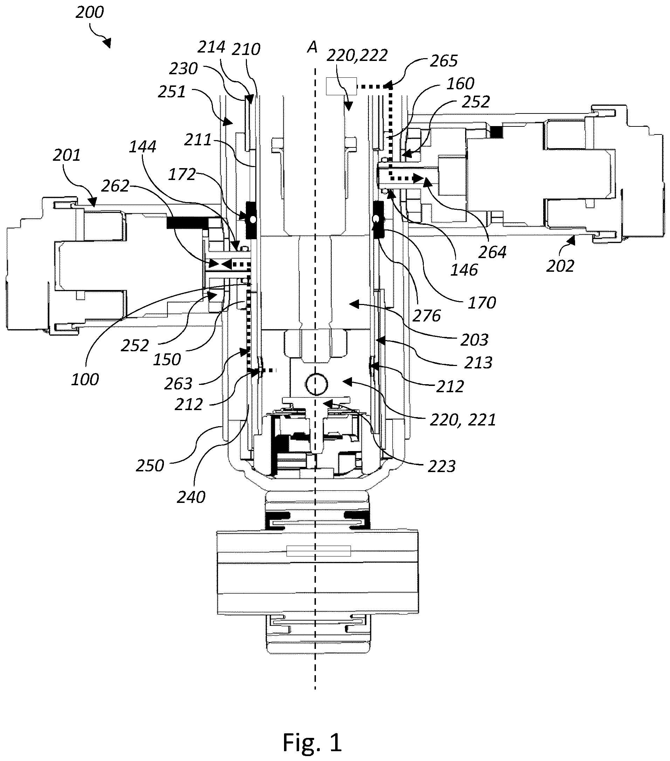

Figure 1 shows a cross-section of a shock absorber 200 comprising an interface element 100 according to an embodiment of the present disclosure. The shock absorber 200 comprises an outer cylinder 250, a first central cylinder 230, a second central cylinder 240 and an inner cylinder 210, all coaxially arranged around a central axis A. The outer cylinder 250 defines a fluid chamber 251 referred to as the "reserve chamber", between the outer cylinder 250, the first central cylinder 230, the second central cylinder 240 and the interface element 100. The inner cylinder 210 defines a fluid chamber 220 in which a piston 203 is slidably inserted. The fluid chamber 220 is divided into two fluid chambers by the piston 203, a first fluid chamber 221, referred to as the "compression chamber", and a second fluid chamber 222, referred to as the "rebound chamber". The shock absorber 200 comprises at least one valve 260 arranged to create a fluid connection between the fluid chamber 220 and the outside of the outer cylinder 250. In other words, the at least one valve 260 allows for a fluid connection between the fluid chamber 220, and/or the intermediate chamber 213, 214. It is to be understood that the at least one valve may not be directly connected to the intermediate chamber 213, 214, and an intermediate part/component may be used between the at least one valve 260 and the intermediate chamber 213, 214. Here, the shock absorber comprises a first valve 262 and a second valve 264. The interface element 100 is arranged coaxially, around axis A, and around the inner cylinder 210 forming a cylinder shaped sleeve. The interface element 100 is arranged partially between the first central cylinder 230 and the second central cylinder 240. The interface element 100, the first central cylinder 230 and the second central cylinder 240 together defines an intermediate chamber 213, 214. The interface element 100 comprises a sealing element 170 with a groove 172 where a gasket 276 is arranged. The gasket 276 seals the interface element 100 and an outer surface 211 of the inner cylinder 210. The gasket 276 thus divides the intermediate chamber 213, 214 into a first intermediate chamber 213, and a second intermediate chamber 214.

Further, the compression chamber 221 comprises two apertures 212. The apertures 212 are in fluid connection with the first intermediate chamber 213. Similarly, the rebound chamber 222 may comprise two apertures (not shown). The apertures are in fluid connection with the second intermediate chamber 214.

A base valve 223 is arranged in the bottom of the compression chamber 221. The base valve 223 creates a fluid connection between the hydraulic fluid (not shown) in the compression chamber 221, and the reserve chamber 251.

The interface element 100 further comprises a first valve slot 144 for receiving one end of the first valve 262, and a second valve slot 146 for receiving one end of the second valve 264. The other end of the first valve 262 and the second valve 264 are each connected to valve housing. More specifically, the first valve 262 is connected to a first valve housing 201, and the second valve 264 is connected to a second valve housing 202. The first valve slot 144 creates a fluid connection between the first valve 262 and the first intermediate chamber 213. The second valve slot 146 creates a fluid connection between the second valve 264 and the second intermediate chamber 214. Thus, hydraulic fluid (not shown) may flow in or out from the first valve 262 and into or out from the first intermediate chamber 213. Similarly, hydraulic fluid may flow in or out from the second valve 264 and into or out from the second intermediate chamber 214. In the example shown in the present figure, a first fluid connection 263 is shown, where hydraulic fluid flows from the compression chamber 221, through the apertures 212, through the first intermediate chamber 213 and into the first valve 262. Moreover, a second fluid connection 265 is shown, where hydraulic fluid flows from the rebound chamber 222, through the apertures in the rebound chamber (not shown), into the second intermediate chamber 214 and to the second valve 264. In both cases, the hydraulic fluid is prevented from flowing from the first intermediate chamber 213 into the second intermediate chamber 214, or vice versa, because of the sealing element 170 and the gasket 276.

One end of the first valve 262 is arranged in the first valve housing 201, and one end of the second valve 264 is arranged in the second valve housing 202. The first and second valve housings 201, 202 are arranged in the outer cylinder 250. The first and second valve housings 201, 202 are partially hollow, for allowing hydraulic fluid to flow therein. Therefore, the first and second valve housings 201, 202 may be arranged in fluid connection with the reserve chamber 251, meaning that the first and second valves 262, 264 are in fluid connection with the reserve chamber 251. As seen in the present figure, the first and second valve housings 201, 202 are in fluid connection with the reserve chamber 251 via an aperture 252 surrounding the first and second valves 262, 264. Hydraulic fluid (not shown) may thus flow into or out from the first valve 262 and/or the second valve 264 to the reserve chamber 251.

With continued reference to Fig. 1, the interface element 100 comprises a first rotational part 150 and a second rotational part 160. The first rotational part 150 is connected to the second central cylinder 240, and the second rotational part 160 is connected to the first central cylinder 230. Furthermore, the first valve slot 144 and the first valve 262 are arranged in the first rotational part 150. Similarly, the second valve slot 146 and the second valve 264 are arranged in the second rotational part 160. In other words, the interface element 100 may be divided in two parts, one for a compression flow valve 262, and one for a rebound flow valve 264. The divide may be in the middle of the interface element 100 around the axis A, such that the interface element 100 comprises two cylindrical parts, the first rotational part 150 and the second rotational part 160. Here, the first rotational part 150 and the second rotational part 160 include a sealing element 170, wherein one part of the sealing element 170 is arranged in the first rotational part 150, and another part of the sealing element 170 is arranged in the second rotational part 160. The sealing element 170 is arranged on a side of the first and second rotating parts 150, 160 facing an outer surface of the inner cylinder 210. Further, the sealing element 170 comprises a groove 172 arranged in a surface of the sealing element 170 facing the outer surface of the inner cylinder 210. In the groove 172, a gasket 276 is arranged. The gasket 276 seals a space between the first and second rotating parts 150, 160 and the outer surface of the inner cylinder 210. Since the first and second rotating parts 150, 160 are arranged partly between the first central cylinder 230 and the second central cylinder 240, and each of the first and second central cylinders 230, 240 defines a first and a second intermediate chamber 213, 214, the gasket 276 provides a seal between these first and second intermediate chambers 213, 214. The following figures will go into the interface element and it's structure more in detail.

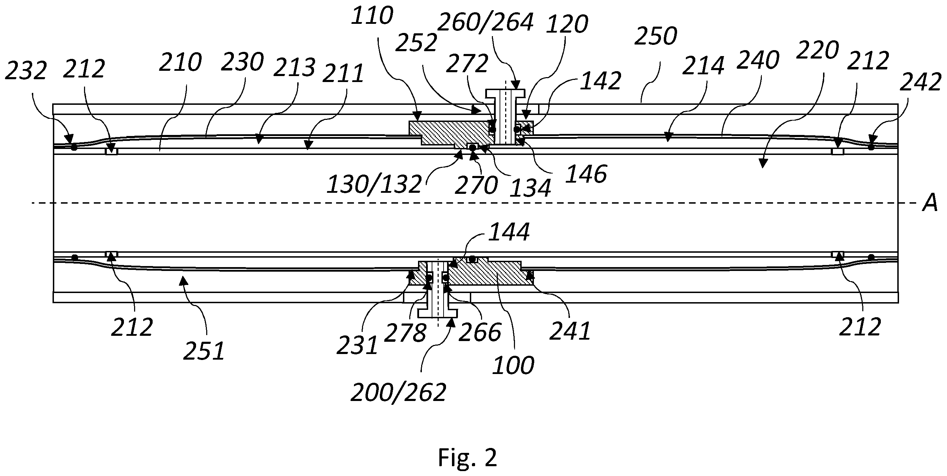

With reference to Fig. 2, a cross-section of an interface element 100 according to an embodiment of the present disclosure is shown. It should be noted that the interface element 100 shown in Fig. 2 has several features in common with the interface element 100 shown in Fig. 1, Fig. 3 and Fig. 4, and it is hereby referred to Fig. 1, Fig. 3, Fig. 4, and the associated text for an increased understanding of some of the features and/or functions of the interface element 100. The interface element 100 is shown arranged in a shock absorber (not shown) comprising an outer cylinder 250, a first central cylinder 230, a second central cylinder 240 and an inner cylinder 210. The piston 203 of the shock absorber is not shown in this figure. The interface element 100 has a cylindrical shape is partly arranged between the first central cylinder 230 and the second central cylinder 240 along axis A. A first engagement end 110 and a second engagement end 120 of the interface element 100 are arranged in contact with an outer surface 231 of the first central cylinder 230 and an outer surface 241 of the second central cylinder 240. The first engaging end 110 and the second engaging end 120 are sealed to the first central cylinder 230, and the second central cylinder 240, respectively. The sealed engagement may be achieved by press-fitting or welding the first engaging end 110 and the second engaging end 120 to the first central cylinder 230 and the second central cylinder 240. The first and second engaging ends 110, 120 of the interface element 100 are thus arranged in the reserve chamber 251. The cylindrical body of the interface element 100 that is not constituted by the first and second engaging ends 110, 120 is arranged in the space between the first central cylinder 230 and the second central cylinder 240. The interface element 100 is thus partly arranged inside the first and second intermediate chambers 213, 214. The sealing element 100 further comprises an engaging part 130 arranged on a surface of the sealing element 100 facing an outer surface 211 of the inner cylinder 210. The engaging part comprises a protruding part 132, which is protruding from the cylindrical body of the interface element 100, on an inner surface of the interface element 100, towards the outer surface 211 of the inner cylinder 210. A groove 134 is arranged in a surface of the protruding part 132, and in the groove 132 a gasket 270 is arranged. The gasket 270 seals the space between the protruding part 132 and the outer surface 211 of the inner cylinder 210. The gasket 270 thus seals between the first intermediate chamber 213 and the second intermediate chamber 214. The first and second central cylinders 230, 240 are sealed in their respective other end by a gasket 232 and a gasket 242, respectively. Thus, the only way for hydraulic fluid to enter or exit the first 213 and/or second 214 intermediate chambers are through the apertures 212 arranged in the inner cylinder 210 or through the first valve 262 or the second valve 262.

With continued reference to Fig. 2, the first valve 262 and the second valve 264 are arranged in the interface element 100. More specifically, the first valve 262 and the second valve 264 are arranged in a first valve slot 144 respectively a second valve slot 146 in the interface element 100. The first and second valve slots 144, 146 are arranged on opposite sides of the axis A. In other embodiments, the first and second valve slots 144, 146 may be arranged on the same side of the axis A. Further, the first and second valve slots 144, 146 are arranged on opposite sides of the gasket 270 in a direction along A. Thus, the first valve slot 144 and the first valve 262 are in fluid connection with the first intermediate chamber 213. Similarly, the second valve slot 146 and the second valve 264 are in fluid connection with the second intermediate chamber 214. The first valve 262 and the second valve 264 are sealed in the first valve slot 144 and the second valve slot 146, respectively. This means that no hydraulic fluid may leak from the reserve chamber 251 through the first 144 and/or second 146 valve slots to the first 213 and/or second 214 intermediate chambers, or vice versa from the first 213 and/or second 214 intermediate chambers through the first 144 and/or second 146 valve slots into the reserve chamber 251. The first valve 262 is sealed in the first valve slot 144 by a gasket 278. The gasket 278 is arranged in a groove 266. The groove 266 is arranged in the first valve 262, in an outer surface of the first valve 262 facing the first valve slot 144, when said first valve 262 is arranged in the first valve slot 144. The second valve 264 is sealed in the second valve slot 146 by a gasket 272. The gasket 272 is arranged in a groove 142. The groove 142 is arranged in the second valve slot 146, in a surface thereof facing the second valve 264 when said second valve 264 is arranged in the second valve slot 146. The gaskets 272, 278 may be any type of gaskets suitable for sealing a valve to a valve slot, for example a type of o-ring. Further, the first valve 262 and the second valve 264 are arranged in the outer cylinder 250. Thus, the first valve 262 and the second valve 264 extends from the outer cylinder 250, through the reserve chamber 251, through the interface element 100 and into the first intermediate chamber 213 and the second intermediate chamber 214. It is to be understood that the at least one valve 262, 264 as illustrated here, may be part of large valve unit that isn't shown here, e.g. as shown in Fig. 1.

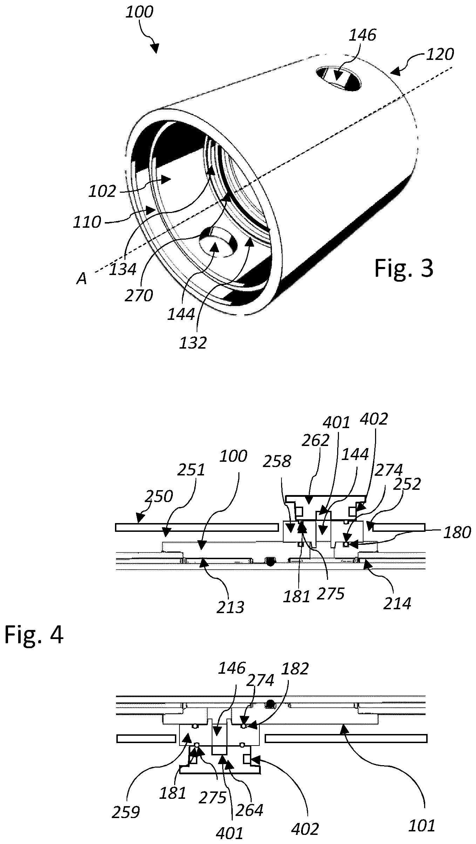

With reference to Fig. 3, a perspective view of an interface element 100 according to an embodiment of the present disclosure is shown. It should be noted that the interface element 100 shown in Fig. 3 has several features in common with the interface element 100 shown in Fig. 1, Fig. 2 and Fig. 4, and it is hereby referred to Fig. 1, Fig. 2, Fig. 4, and the associated text for an increased understanding of some of the features and/or functions of the interface element 100. As previously discussed, the interface element 100 comprises a cylindrical shape. The first engaging end 110 of the interface element 100 is a groove arranged in an inner surface 102 of the interface element 100. The thickness of the groove of the first engaging element 110 may correspond to a thickness of the first central cylinder 230. The second engaging element 120 is arranged in a similar way (not shown), i.e. a groove arranged in the inner surface 102 of the interface element 100. The first engaging end 110 and the second engaging end 120 extends continuously around an inner periphery of the interface element 100.

With continued reference to Fig. 3, a first valve slot 144 is seen arranged in the cylindrical body of the interface element 100. The first valve slot 144 is an aperture extending through the wall of the cylindrical body of the interface element 100. Similarly, the second valve slot 146 is arranged in the cylindrical body of the interface element 100. The second valve slot 146 is an aperture extending through the wall of the cylindrical body of the interface element 100. The first valve slot 144 and the second valve slot 146 are arranged on opposite sides of the axis A. The first valve slot 144 and the second valve slot 146 may be manufactured by drilling or milling a hole in the cylindrical body of the interface element 100.

Moreover, the protruding part 132 is seen arranged in the inner surface 102 of the interface element 100. The protruding part 132 protrudes radially towards a center of the cylindrical body of the interface element 100. The protruding part 132 comprises a groove 134, where a gasket 270 is arranged. The protruding part 132, the groove 134 and the gasket 270 extends continuously around an inner periphery of the interface element 100.

With reference to fig. 4, a cross-section of a detailed view of an interface element 100 according to an embodiment of the present disclosure is shown. It should be noted that the interface element 100 shown in Fig. 4 has several features in common with the interface element 100 shown in Fig. 1, Fig. 2 and Fig. 3, and it is hereby referred to Fig. 1, Fig. 2, Fig. 3, and the associated text for an increased understanding of some of the features and/or functions of the interface element 100. In this figure, the interface element 100 comprises a groove 180 arranged in a surface 101 of the interface element 100 facing the outer cylinder 250. The groove 180 is arranged around the first valve slot 144. Further, there is a first outer valve slot 258 and a second outer valve slot 259 arranged in the reserve chamber 251 between the outer cylinder 250 and the interface element 100. The first outer valve slot 258 and the second outer valve slot 259 are coinciding with the first valve slot 144 and the second valve slot 146, respectively. The second outer valve slot 258 comprises a groove 182 arranged in a surface of the second outer valve slot 258 facing the interface element 100. The grooves 180, 182 have gaskets 274 arranged in them, the gaskets 274 are o-rings for sealing between the interface element 100 and the first and second outer valve slots 258, 259. The first outer valve slot 258 and the second outer valve slot 259 may be a plug or similar, arranged to seal the first valve 262 and the second valve 264 from the reserve chamber 251. The first outer valve slot 258 and the second outer valve slot 259 have corresponding grooves 181 arranged on a surface thereof facing the inner surface of the outer cylinder 250. The grooves 181 have gaskets 275 arranged in them, the gaskets 275 are o-rings for sealing between the first and second outer valve slots 258, 259 and the valves 262, 264.The first outer valve slot 258 and the second outer valve slot 259 may form an interface element unit together with the interface element 100. The first outer valve slot 258 and the second outer valve slot 259 may be an additional component (in addition to the interface element 100) that is part of a shock absorber. The flow of hydraulic fluid (not shown in this figure) may flow from the first intermediate chamber 213 or the second intermediate chamber 214, into the first 144 or second 146 valve slot of the first 258 or second 259 outer valve slots, respectively. The hydraulic fluid may then enter one cavity 401 arranged in the first valve 262 or the second valve 264, and exit through a second cavity 402 arranged in the first 262 or second 264 valve. The first valve 262 and the second valve 264 are arranged in the outer cylinder 250, in an aperture 252 thereof, why the hydraulic fluid may flow from the cavities 402 in the first 262 and second 264 valves, and into the reserve chamber 251 through the aperture 252.

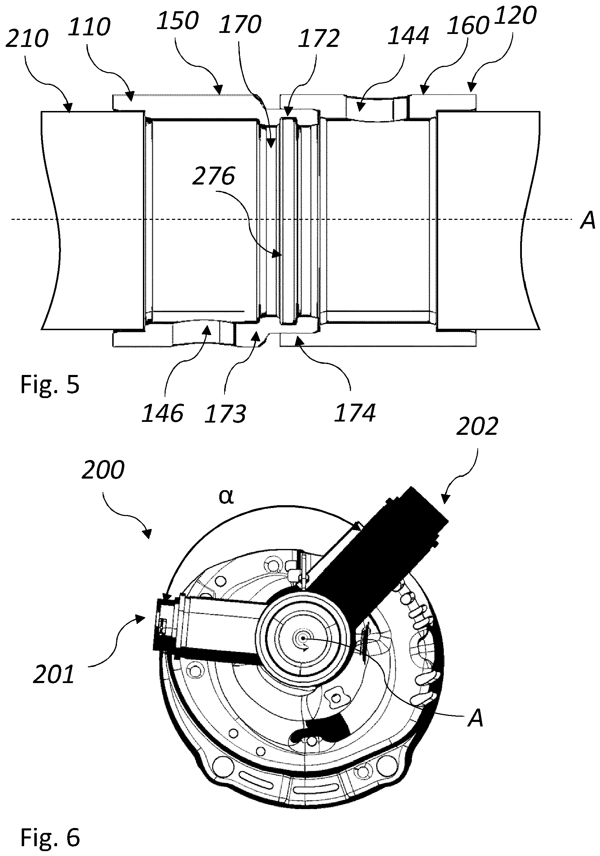

With reference to fig. 5, a detailed view of a first rotating part 150 and a second rotating part 160 of an interface element 100 according to an embodiment of the present disclosure is shown. The first rotating part 150 comprises the first engaging end 110, and the second rotating part 160 comprises the second engaging end 120. Between the first rotating part 150 and the second rotating part 160 in a direction along A, there is a sealing element 170 installed. The sealing element 170 is a cylindrical piece configured to seal between the first 150 and second 160 rotating parts. Opposite to the first engaging end 110 of the first rotating part 150, there is a third engaging end 173. Similarly, opposite to the second engaging end 120 of the second rotating part 160 there is a fourth engaging end 174. The third engaging end 173 of the first rotating part 150 and the fourth engaging end 174 of the second rotating part 160 are arranged to interlock with each other. The fourth engaging end 174 has a greater inner diameter than the third engaging end 173, why the fourth engaging end 174 fits like a sleeve over the third engaging end 173. Thereby, the first rotating part 150 and the second rotating part 160 may be interlocked to form one unit. However, the interlock between the first rotating part 150 and the second rotating part 160 is configured to allow for the first rotating part 150 and the second rotating part 160 to rotate around axis A independently of each other. The sealing element 170 further comprises a groove 172 in which a gasket 276 is arranged. The gasket 276 is an O-ring. In the present figure, the sealing element 170, the groove 172 and the gasket 276 are arranged within the third engaging end 173 and the fourth engaging end 174, thereby sealing between the first rotating part 150 and second rotating part 160. In other examples, for example as shown in fig. 1, the sealing element 170, the groove 172 and the gasket 276 are protruding from an outer surface of the first rotating part 150 and the second rotating part 160. Thereby, the sealing element 170 may also be used to seal between the first intermediate chamber 213 and the second intermediate chamber 214. The first rotating part 150 and the second rotating part 160 may rotate independently from each other to adapt the interface element 100 to be installed in a shock absorber 200. Some type of shock absorbers comprising more than one valve may have their valve housing arranged in varying positions relative each other around the outer cylinder 250. Dividing the interface element 100 into a first rotating part 150 and a second rotating part 160 may thus be useful since it enables the first 144 and second 146 valve slots to be rotated to a position coinciding with the positions of the valve housings in the outer cylinder 250 of the shock absorber.

With reference to fig. 6, a shock absorber 200 according to an embodiment of the present disclosure is shown from the outside, wherein the shock absorber 200 extends along the axis A. Here, a first valve housing 201 and a second valve housing 202 are arranged in the shock absorber 200 . As discussed above, the first rotating part 150 and the second rotating part 160 of an interface element 100 may be rotated to coincide with the first valve housing 201 and the second valve housing 202 of the shock absorber. In the example shown in fig. 6, the first valve housing 201 and the second valve housing 202 are arranged with an angle α between them. Thus, the first rotating part 150 and the second rotating part 160 may be arranged with the same angle α between them, such that the first valve slot (not shown) and the second valve slot (not shown) of the interface element 100 coincides with the position of the first valve housing 201, and the second valve housing 202, respectively. Furthermore, the angle α between the first and second valve slot (not shown) of the interface element 100 may be varied to fit different applications.

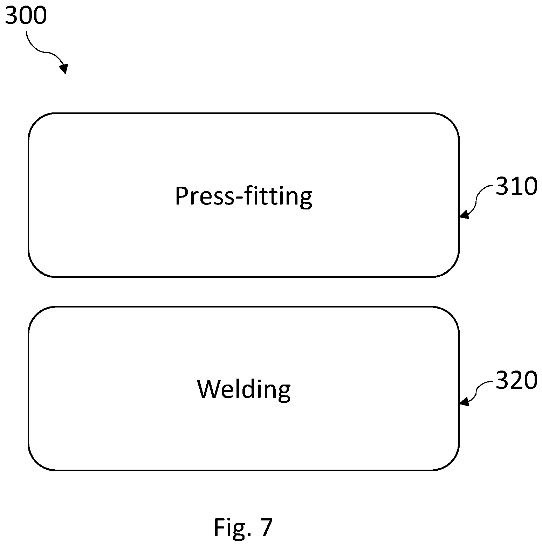

With reference to fig. 7, a method 300 for installing an interface element into a shock absorber according to an embodiment of the present disclosure is shown. The method comprises a step 310 of press-fitting the interface element 100 in between the first central cylinder 230 and the second central cylinder 240, such that the first engaging end 110 sealingly engages a surface 231 of the first central cylinder 230 and the second engaging end 120 sealingly engages a surface 241 of the second central cylinder 240. Alternatively, the method comprises the step 320 of welding the first engaging end 110 to a surface 231 of the first central cylinder 230 and the second engaging end 120 to a surface 241 of the second central cylinder 240.

While the foregoing is directed to embodiments of the disclosure, other and further embodiments may be devised without parting from the inventive concept discussed herein. The scope of the invention is however determined by the claims.

## Claims

1. An interface element (100) adapted for use in a shock absorber (200), the shock absorber (200) comprising an inner cylinder (210) at least partially defining a fluid chamber (220), a first central cylinder (230), a second central cylinder (240), and an outer cylinder (250), and at least one valve (260) arranged to create a fluid connection between the fluid chamber (220) and the outside of the outer cylinder (250),
wherein the interface element (100) comprises a cylindrical shape, and wherein the interface element (100), the inner cylinder (210), the first central cylinder (230), the second central cylinder (240) and the outer cylinder (250) are arranged coaxially around an axis A,
wherein the interface element (100) comprises
a first engaging end (110) configured to sealingly engage a surface (231) of the first central cylinder (230),
a second engaging end (120) configured to sealingly engage a surface (241) of the second central cylinder (240), and
an engaging part (130) configured to sealingly engage a surface (211) of the inner cylinder (210), and
at least one valve slot (140) configured to sealingly engage the at least one valve (260),
such that the interface element (100) forms a sealing interface between the first central cylinder (230), the second central cylinder (240), the inner cylinder (210) and the at least one valve (260).

2. The interface element (100) according to claim 1, wherein the engaging part (130) comprises a protruding part (132) configured to protrude radially from the interface element (100) and to sealingly engage a surface (211) of the inner cylinder (210).

3. The interface element (100) according to claim 2, wherein the protruding part (132) comprises a first groove (134) and first sealing means (270) arranged in the first groove (134), wherein the first sealing means (270) are configured to sealingly engage a surface (211) of the inner cylinder (210).

4. The interface element (100) according to any one of the preceding claims, wherein the at least one valve slot (140) comprises a second groove (142) and second sealing means (272) arranged in the second groove (142), wherein the second sealing means (272) are configured to sealingly engage the at least one valve (260).

5. The interface element (100) according to any one of the preceding claims, wherein the interface element (100) comprises a third groove (180) arranged in a surface (101) facing the outer cylinder and third sealing means (274) configured to sealingly engage the at least one valve (260).

6. The Interface element (100) according to any one of claims 3-5, wherein at least one of the first sealing means (270), the second sealing means (272) and the third sealing means (274) comprises a gasket.

7. The interface element (100) according to any one of the preceding claims, wherein the inner cylinder (210) comprises at least one aperture (212), wherein the aperture (212) creates a fluid connection between the at least one valve (260) and the fluid chamber (220).

8. The interface element (100) according to any one of the preceding claims, wherein the first engaging end (110) is configured to sealingly engage a surface (231) of the first central cylinder (230), and the second engaging end (120) is configured to sealingly engage a surface (241) of the second central cylinder (240), by at least one of welding and press-fitting.

9. The interface element (100) according to any one of the preceding claims, wherein the at least one valve (260) comprises a first valve (262) and a second valve (264), and the at least one valve slot (140) comprises a first valve slot (144) configured to sealingly engage the first valve (262) and a second valve slot (146) configured to sealingly engage the second valve (264).

10. The interface element (100) according to claim 9,
wherein the interface element (100) comprises a first rotating part (150) and a second rotating part (160), each rotating part (150,160) rotatably arranged around the axis A, wherein the first rotating part (150) comprises the first valve slot (144) configured to sealingly engage the first valve (262), and the second rotating part (160) comprises the second valve slot (146) configured to sealingly engage the second valve (264), and wherein the first rotating part (150) and the second rotating part (160) are configured to rotate independently of each other,
wherein the first rotating part (150) is configured to engage the first valve (262), and the second rotating part (160) is configured to engage the second valve (264).

11. The interface element (100) according to claim 10, wherein the interface element (100) further comprises a sealing element (170) arranged at least partially between the first rotating part (150) and the second rotating part (160), wherein the sealing element (170) is configured to sealingly engage the first rotating part (150) and the second rotating part (160),
wherein the first rotating part (150) and second rotating part (160) are configured to be individually rotatable relative the sealing element (170).

12. The interface element (100) according to claim 11, wherein the sealing element (170) comprises a fourth groove (172) and fourth sealing means (276) arranged in the fourth groove (172), wherein the fourth sealing means (276) are configured to sealingly engage a surface (211) of the inner cylinder (210).

13. A shock absorber (200) comprising
an inner cylinder (210) at least partially defining a fluid chamber (220),
a first central cylinder (230), a second central cylinder (240), and an outer cylinder (250), wherein all cylinders are arranged coaxially around an axis A,
a first valve (262) arranged to create a first fluid connection (263) between the fluid chamber (220) and the outside of the outer cylinder (250),
a second valve (264) arranged to create a second fluid connection (265) between the fluid chamber (220) and the outside of the outer cylinder (250), wherein the first and second fluid connections (263, 265) are two different fluid connections, and
an interface element (100) according to any one of claims 1-12,
wherein the interface element (100) forms a sealing interface between the first central cylinder (230), the second central cylinder (240), the inner cylinder (210), the first valve (262) and the second valve (264).

14. The shock absorber (200) according to claim 13, wherein at least one of the first valve (262) and the second valve (264) comprises a fifth groove (266), wherein the shock absorber (200) comprises fifth sealing means (278) arranged in the fifth groove (266) configured to sealingly engage the interface element (100).

15. A method (300) for installing an interface element (100) according to any of claims 1 to 11 into a shock absorber (200), wherein the interface element (100) is installed by at least one of
press fitting (310) the interface element (100) in between the first central cylinder (230) and the second central cylinder (240), such that the first engaging end (110) sealingly engages a surface (231) of the first central cylinder (230) and the second engaging end (120) sealingly engages a surface (241) of the second central cylinder (240), and
welding (320) the first engaging end (110) to a surface (231) of the first central cylinder (230) and the second engaging end (120) to a surface (241) of the second central cylinder (240).
